# FASCICULE DE BREVET EUROPEEN

(11) **EP 1 996 310 B1**
(45) Date de publication et mention de la délivrance du brevet: **21.07.2010**
(21) Numéro de dépôt: 07731744.4
(22) Date de dépôt: 14.03.2007
(51) Int. Cl.: B01D 46/52, B60H 3/06, B29C 65/02

(54) **ENSEMBLE DE BAGUETTES POUR CADRE DE SUPPORT D'UN MEDIA DE FILTRATION**
STABSET FÜR EINEN RAHMEN ZUR STÜTZE EINES FILTRIERMEDIUMS
SET OF RODS FOR A FRAME FOR SUPPORTING A FILTRATION MEDIUM

(30) Priorité: 17.03.2006 FR 0650923
(43) Date de publication de la demande: 03.12.2008
(73) Titulaire: Valeo Matériaux de Friction SAS, 87020 Limoges (FR)
(72) Inventeur: KLOSSEK, Robert, F-14700 Falaise (FR); LEBRETON, Sébastien, F-61100 Flers (FR); BISSON, Laurent, F-14110 Conde Sur Noireau (FR)
(86) Numéro de dépôt international: PCT/FR2007/050928
(87) Numéro de publication internationale: WO 2007/113412

(56) Documents cités:
- EP-A2- 0 396 385
- EP-A2- 1 344 630
- WO-A-01/47691
- WO-A-03/013695
- FR-A1- 2 772 670
- JP-A- 58 074 315
- JP-A- 58 212 913
- US-A- 2 909 237
- US-A- 5 540 808
- "SOUDAGE PAR VIBRATION: CADENCES EN HAUSSE" PLASTIQUES MODERNES ET ELASTOMERES, COMPAGNIE FRANCAISE D'EDITIONS. PARIS, FR, 1 mars 1982 (1982-03-01), pages 48-50, XP000566398 ISSN: 0032-1303

## Description

La présente invention est relative à un ensemble de baguettes destiné à la fabrication d'un cadre de support d'un média de filtration, notamment pour un filtre destiné à équiper un appareil d'aération, de chauffage ou de climatisation d'un véhicule automobile. L'invention se rapporte également à un tel cadre ainsi qu'à un procédé de fabrication de ce cadre.

Dans un véhicule automobile, des filtres sont couramment utilisés pour filtrer l'air de l'habitacle ou des gaz d'échappement. Un filtre comporte classiquement un ou plusieurs médias de filtration aptes à retenir les particules de ces gaz ou à en faire réagir certains constituants. Ces médias de filtration se présentent sous forme de feuilles généralement pliées en accordéon. Ils sont fixés, par exemple par hotmelt, sur un cadre sensiblement rectangulaire leur conférant de la rigidité.

Un filtre doit pouvoir être monté facilement, c'est-à-dire être rapidement positionné et bloqué en position, de manière fiable, par exemple dans un boîtier de climatisation. Dans cette position, dite « position de service », il doit présenter une bonne résistance contre la déformation afin d'éviter que le gaz à filtrer ne fuit en périphérie du filtre. Le cadre de support doit donc répondre à ces exigences.

Le cadre peut être surmoulé, ce qui garantit une bonne robustesse contre les efforts de montage et de démontage. Les cadres surmoulés présentent cependant l'inconvénient d'exiger la réalisation de moules spécifiques à chaque filtre. De tels moules entraînent des délais supplémentaires et des investissements importants. En outre, ils exigent des presses particulières qui ne sont pas toujours disponibles.

Le cadre peut également être formé par assemblage de baguettes, généralement par soudure ou collage bord à bord. Ces baguettes peuvent être complexes, c'est-à-dire présenter plusieurs matériaux différents en couches. Elles peuvent également être renforcées par clipsage de profilés plastiques sur le cadre ou sur le dernier pli du média de filtration.

La résistance mécanique de ces soudures est cependant insatisfaisante, en particulier en cas d'effort sur le cadre selon une direction qui conduirait, sans le cadre, à replier la structure en accordéon formée par le média de filtration. Dans cette direction, la structure en accordéon ne contribue pas en effet à la rigidité du filtre.

Il existe donc un besoin pour un ensemble de baguettes qui permette de fabriquer des cadres de dimensions variables, à un coût limité, de manière fiable.

Le but de la présente invention est de satisfaire ce besoin.

Selon l'invention, on atteint ce but au moyen d'un ensemble de baguettes destiné à la fabrication d'un cadre de support d'un média de filtration, notamment pour un filtre destiné à équiper un appareil d'aération, de chauffage ou de climatisation d'un véhicule automobile selon une des revendications 1-7.

Lors de la soudure des première et deuxième baguettes l'une à l'autre, lesdits premier et deuxième champs, au moins en partie fondus, sont poussés l'un sur l'autre. Comme on le verra plus en détail dans la suite de la description, les formes non complémentaires de ces champs permettent avantageusement une interpénétration plus importante de la matière fondue des première et deuxième baguettes. La soudure est ainsi plus homogène et s'étend sur une épaisseur plus profonde. Il en résulte une fiabilité accrue.

De plus, les dimensions des cadres peuvent être facilement adaptées au besoin, et à moindre coût, par un choix approprié des baguettes.

Les formes non complémentaires sont obtenues en utilisant des baguettes telles que le premier champ présente au moins une protubérance sous la forme d'un crochet, de préférence pointu, tandis que, au moins dans la zone destinée à être fixée à ladite protubérance, le deuxième champ est sensiblement plan. La forme en crochet présente l'avantage de pouvoir retenir de la matière qui, à l'état fondu, aurait reflué dans l'ouverture du crochet lors des opérations de soudure. La fiabilité de la soudure en est encore améliorée.

L'invention se rapporte également à un procédé de fabrication d'un cadre de support d'un média de filtration, notamment pour un filtre destiné à équiper un appareil d'aération, de chauffage ou de climatisation d'un véhicule automobile, à partir d'un ensemble de baguettes selon une des revendications 1-7. Selon l'invention, ce procédé comporte les étapes successives suivantes :
a) fusion de première et deuxième régions bordées par lesdits premier et deuxième champs, respectivement,
b) application et pression dudit premier champ sur ledit deuxième champ de manière à faire s'interpénétrer lesdites première et deuxième régions, en particulier dans les zones où les premier et deuxième champs présentent des formes non complémentaires,
c) refroidissement des première et deuxième régions interpénétrées de manière à les durcir.

De préfèrence ce procédé comporte encore une et de préférence plusieurs des caractéristiques optionnelles suivantes.
- La base de la protubérance présente ainsi avantageusement une rigidité suffisante pour « pousser » l'extrémité libre fondue au sein de la deuxième région fondue, contribuant ainsi efficacement au mélange des matières fondues des première et deuxième régions.
- A l'étape b), la protubérance étant un crochet, on pousse ledit crochet au sein de la deuxième région jusqu'à remplissage complet, par de la matière fondue refluée, de son ouverture (ou de ses ouvertures). Avantageusement, lesdits premier et deuxième champs sont alors en contact sur toute leur longueur d'appui. Autrement dit, la ligne de soudure est continue, sans trou. De préférence encore, on arrête de pousser le crochet dès que la matière refluée remplit son ou ses ouverture(s). On évite ainsi avantageusement que de la matière fondue ne déborde.
- La première baguette définit un grand côté du cadre, le premier champ s'étendant le long d'un bord d'extrémité de la première baguette.

L'invention concerne aussi un cadre obtenu à partir d'un ensemble de baguettes selon l'invention, notamment par un procédé selon l'invention, ainsi que l'utilisation d'un tel cadre dans un filtre à air d'habitacle, un filtre combiné, un filtre à charbon actif ou un filtre à particules, en particulier pour un véhicule automobile.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique d'un filtre comportant un cadre selon l'invention ;
- la figure 2 est une vue schématique de deux baguettes d'un ensemble de baguettes selon l'invention, dans une position où elles sont sur le point d'être soudées l'une à l'autre pour former le cadre d'un filtre selon la figure 1;
- la figure 3 représente un détail de la figure 2.

Par « champ », on désigne les parties des première et deuxième baguettes destinées à entrer en contact et à être soudées l'une avec l'autre lors de l'assemblage de ces baguettes.

De manière générale, on appelle « crochet » une excroissance s'étendant à partir d'un bord et délimitant une ou plusieurs ouvertures. Une ouverture est un volume de réception apte à retenir, lors d'une traction selon une direction sensiblement perpendiculaire à ce bord, une pièce qui y serait disposée. Ce volume peut être défini par l'excroissance elle-même, par exemple dans le cas d'un crochet en forme de cédille ou de faucille, ou en coopération avec le bord, par exemple dans le cas d'un crochet en forme de champignon, de T, de delta r ou de queue d'aronde. Autrement dit, la forme en crochet est une forme qui rendrait impossible un démoulage du crochet perpendiculairement au bord sans déformation ou rupture du moule ou du crochet.

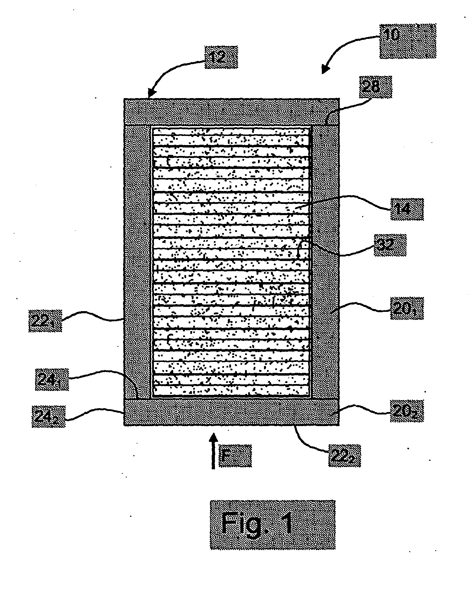

La figure 1 représente un filtre 10 constitué par un cadre 12 à l'intérieur duquel est fixé un média de filtration 14 en accordéon.

Le cadre 12, sensiblement rectangulaire, est réalisé par assemblage de deux grandes baguettes 20₁ et deux petites baguettes 20₂.

Dans la suite de la description, les indices 1 et 2 sont utilisés pour préciser qu'une référence concerne une grande baguette et une petite baguette respectivement.

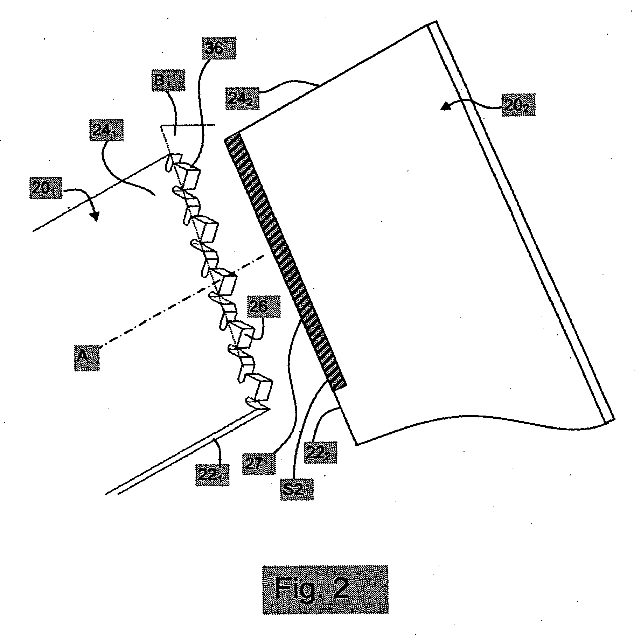

Chaque baguette 20₁ ou 20₂ a la forme d'une bande sensiblement plate, de préférence en polypropylène (PP), délimitée par deux bords latéraux, référencés 22₁ et 22₂ respectivement, et deux bords d'extrémité, référencés 24₁ et 24₂ respectivement. Comme représenté sur la figure 2, les champs 26 des bords d'extrémité 24₁ des grandes baguette 20₁ sont soudés aux champs 27 des bords latéraux 22₂ des petites baguettes 20₂, selon des lignes de soudure 28.

Le média de filtration 14, fixé au cadre 12, est plié en accordéon selon une multitude de plis 32 qui s'étendent sensiblement parallèlement aux petites baguettes 20₂. Comme expliqué ci-dessus, selon l'état de la technique, le cadre 12 présente une résistance mécanique faible en cas de pression selon une direction F parallèle aux grandes baguettes 20₁.

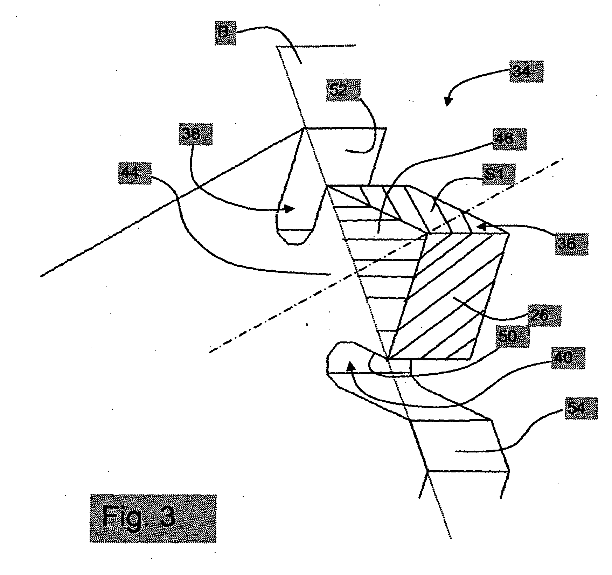

Selon l'invention, et comme représenté sur les figures 2 et 3, avant d'être soudé, chaque champ 26 d'un bord d'extrémité 24₁ d'une grande baguette 20₁ comporte des crochets 34, de préférence régulièrement répartis le long du champ 26. Un crochet 34 est constitué, dans l'exemple représenté, par la combinaison d'un picot 36 d'axe A sensiblement parallèle à la direction des grandes baguettes, et de deux rainures 38. Chaque rainure 38 définit, avec le picot 36, une ouverture 40.

Un picot 36 présente, vu de face, une forme en losange. Il est constitué d'une base 44 raccordant le picot 36 à la baguette et, à son extrémité libre, d'une pointe 46. La base 44 et la pointe 46 se rejoignent dans la zone de largeur maximale du picot 36, selon un plan B, commun à tous les picots 36.

Les flancs 50 de la base 44 délimitent les premières faces de deux rainures 38 s'étendant de part et d'autre du picot 36. Les deuxièmes faces 52 de ces rainures 38 sont sensiblement parallèles aux premières faces. Elles rejoignent un plateau 54 qui, dans le mode de réalisation représenté, s'étend dans le plan B.

De préférence, le volume des deux rainures 38 adjacentes à un picot 36 est égal au volume de matière de la pointe 46 de ce picot 36, c'est-à-dire de la partie du picot 36 qui s'étend au-delà du plan B.

La succession rainure, picot, rainure, plateau, rainure, picot, rainure, etc., se répète de préférence tout au long du bord d'extrémité 24₁. De préférence, comme représenté, les picots 36 ne sont présents que sur les champs 26 des grandes baguettes 20₁ tandis que les champ 27 des petites baguettes 20₂ qui sont destinés à être soudés sur les champs 26 ne présentent aucun picot et sont sensiblement plans.

Pour fabriquer un cadre de support au moyen d'un ensemble de baguettes selon l'invention, on assemble les grandes baguettes aux petites baguettes, de préférence de la manière suivante.

On prépare d'abord une grande baguette dont le champ 26 est pourvu de picots et une petite baguette comportant un champ 27 sensiblement plan.
a) On chauffe ensuite les régions à souder S1 et S2 desdites grande et petite baguettes, de manière à les faire fondre. De préférence, la région S1, hachurée sur la figure 3, ne comporte que les pointes des picots. Le chauffage peut par exemple résulter d'un rayonnement infrarouge.
b) Puis on presse les champs 26 et 27 l'un sur l'autre. Les matière fondues des régions S1 et S2 se mélangent alors intimement. A la différence d'une soudure classique où les deux champs à souder l'un à l'autre ont des formes sensiblement complémentaires, la présence de picots conduit à une pénétration en profondeur de la matière de la grande baguette au sein de la matière de la petite baguette. La présence de picots conduit également à un mélange de ces deux matières. La qualité et la fiabilité de la soudure en est avantageusement améliorée.
   La pénétration des picots 36 conduit également à un reflux du mélange de matières fondues dans l'ouverture 40 des picots, à savoir dans les rainures 38. La pénétration se poursuit de préférence jusqu'à ce que les plateaux 54 viennent en contact avec le champ 27. Le volume de matière de la pointe 46 des picots 36 étant sensiblement identique à celui des rainures 38, les rainures 38 sont alors sensiblement remplies par le mélange de matières fondues, sans que ces dernières n'en débordent.
c) Enfin, on laisse le mélange de matières fondues se refroidir et durcir. Après durcissement, la matière disposée dans les rainures 38 coopère avec la base 44 des picots 36 pour s'opposer à tout écartement des deux baguettes soudées. La soudure est ainsi particulièrement fiable.

Plus précisément, pour une même longueur de champ 26, de 2,8 mm, des essais ont montré que l'assemblage ainsi obtenu permet, lorsque le champ 26 est pourvu de rainures et de picots, de résister à une force de traction de 180N, alors que si le champ 26 est dépourvu de picots, le même assemblage ne résiste qu'à une force de traction de 40N. Si le champ 26 comporte des picots, mais pas de rainures, c'est-à-dire si le champ 26 ne comporte que des protubérances en forme de pointe, la force de traction maximale est de 90N.

Le filtre testé présentait une longueur de 319 mm, une largeur de 185,5 mm et une hauteur de 38 mm.

Bien entendu, l'invention n'est pas limitée aux modes de réalisation décrits et représentés.

Bien que le mode de réalisation préféré soit celui à picots-rainures, tel que celui représenté sur la figure 2, la forme des protubérances n'est pas limitée à des formes en crochet, en pointe ou en crochet pointu.

Le nombre de picots peut également varier. De préférence, le premier champ comporte au moins un picot à chacune de ses extrémités, de préférence de 3 à 5 picots, en fonction de la hauteur du cadre.

Le volume des rainures peut être différent de celui des protubérances. Des protubérances peuvent enfin être disposées sur le champ 27 de la petite baguette.

## Revendications

1. Ensemble de baguettes destiné à la fabrication d'un cadre de support d'un média de filtration, notamment pour un filtre destiné à équiper un appareil d'aération, de chauffage ou de climatisation d'un véhicule automobile, comportant des première (20₁) et deuxième (20₂) baguettes présentant des premier (26) et deuxième (27) champs, respectivement, prévus pour être soudés l'un à l'autre, dans lequel lesdits premier et deuxième champs présentent des formes non complémentaires et dans lequel le premier champ (26) présente au moins une protubérance (36), tandis que, dans la zone destinée à être fixée à ladite protubérance, le deuxième champ (27) est sensiblement plan, **caractérisé en ce que** ladite protubérance est un crochet (34).

2. Ensemble de baguettes selon la revendication1, **caractérisé en ce que** ledit crochet (34) est constitué, par la combinaison d'un picot (36) et de deux rainures (38).

3. Ensemble de baguettes selon la revendication 2, **caractérisé en ce que** chaque rainure (38) définit, avec le picot (36), une ouverture (40).

4. Ensemble de baguettes selon la revendication 2 ou 3, **caractérisé en ce que** ledit picot (36) présente, vu de face, une forme en losange et **en ce qu'**il est constitué d'une base (44) raccordant le picot (36) à la baguette et, à son extrémité libre, d'une pointe (46).

5. Ensemble de baguettes selon la revendication 4, **caractérisé en ce que** la base (44) et la pointe (46) se rejoignent dans la zone de largeur maximale du picot (36), selon un plan B, commun à tous les picots (36).

6. Ensemble de baguettes selon la revendication 4 ou 5, **caractérisé en ce que** ladite base (44) comporte des flancs (50) qui délimitent des premières faces de deux rainures (38) s'étendant de part et d'autre du picot (36), et **en ce que** des deuxièmes faces (52) desdites rainures (38) sont sensiblement parallèles auxdites premières faces.

7. Ensemble de baguettes selon l'une quelconque des revencations 2 à 6, **caractérisé en ce que** le volume de deux rainures (38) adjacentes à un picot (36) est égal au volume de matière de la pointe (46) de ce picot (36).

8. Procédé de fabrication d'un cadre (12) de support d'un média de filtration (14), notamment pour un filtre (10) destiné à équiper un appareil d'aération, de chauffage ou de climatisation d'un véhicule automobile, à partir d'un ensemble de baguettes selon l'une quelconque des revendications précédentes, ledit procédé comportant les étapes successives suivantes :
a) fusion de première (S1) et deuxième (S2) régions bordées par lesdits premier (26) et deuxième (27) champs, respectivement,
b) application et pression dudit premier champ (26) sur ledit deuxième champ (27) de manière à faire s'interpénétrer lesdites première et deuxième régions, en particulier dans les zones où les premier et deuxième champs présentent des formes non complémentaires,
c) refroidissement des première et deuxième régions interpénétrées de manière à les durcir.

9. Procédé selon la revendication 8, le premier champ (26) présentant au moins un crochet (36) et le deuxième champ (27) étant plan, .dans lequel, à l'étape a), seule une extrémité libre (46) du crochet (36) est fondue.

10. Procédé selon la revendication 9, dans lequel, à l'étape b), on pousse ledit crochet (36) au sein de la deuxième région (S2) jusqu'à remplissage complet, par de la matière refluée, de(s) ouverture(s) (40,38) dudit crochet (36).

## Claims

1. Set of rods designed for production of a support frame for a filtering medium, in particular for a filter which is designed to equip a ventilation, heating, or air-conditioning device for a motor vehicle, comprising first (20₁) and second (20₂) rods which have first (26) and second (27) fields respectively, and are designed to be welded to one another, wherein the said first and second fields have forms which are non-complementary, and wherein the first field (26) has at least one protuberance (36), whereas, in the area which is designed to be secured to the said protuberance, the second field (27) is substantially flat, **characterised in that** the said protuberance is a hook (34).

2. Set of rods according to claim 1, **characterised in that** the said hook (34) is constituted by the combination of a pin (36) and two grooves (38).

3. Set of rods according to claim 2, **characterised in that** each groove (38) defines an opening (40) together with the pin (36).

4. Set of rods according to claim 2 or claim 3, **characterised in that,** when seen from the front, the said pin (36) has the shape of a rhombus, and **in that** it consists of a base (44) which connects the pin (36) to the rod, and, at its free end, it consists of a point (46).

5. Set of rods according to claim 4, **characterised in that** the base (44) and the point (46) are joined in the area of maximum width of the pin (36), according to a plane B which is common to all the pins (36).

6. Set of rods according to claim 4 or claim 5, **characterised in that** the said base (44) comprises flanks (50) which delimit first surfaces of two grooves (38) which extend on both sides of the pin (36), and **in that** second surfaces (52) of the said grooves (38) are substantially parallel to the said first surfaces.

7. Set of rods according to any one of claims 2 to 6, **characterised in that** the volume of two grooves (38) adjacent to a pin (36) is equal to the volume of material of the point (46) of this pin (36).

8. Method for production of a support frame (12) for a filtering medium (14), in particular for a filter (10) which is designed to equip a ventilation, heating, or air-conditioning device for a motor vehicle, from a set of rods according to any one of the preceding claims, the said method comprising the following steps in succession:
a) melting of first (S1) and second (S2) regions which are bordered by the said first (26) and second (27) fields, respectively;
b) application and pressure of the said first field (26) onto the said second field (27), such as to make the said first and second regions interpenetrate, in particular in the areas where the first and second fields have non-complementary forms; and
c) cooling of the first and second interpenetrated regions such as to harden them.

9. Method according to claim 8, the first field (26) having at least one hook (36) and the second field (27) being flat, wherein, in step a), only a free end (46) of the hook (36) is melted.

10. Method according to claim 9, wherein, in step b), the said hook (36) is pushed into the second region (S2) until the opening(s) (40, 38) in the said hook (36) is/are filled completed by refluxed material.

## Patentansprüche

1. Stabset zur Herstellung eines Rahmens zum Tragen eines Filtermediums, insbesondere für einen Filter zur Ausrüstung einer Belüftungs-, Heizungs- oder Klimaanlage eines Kraftfahrzeugs, umfassend einen ersten (20₁) und einen zweiten (20₂) Stab mit einem ersten (26) und einem zweiten (27) Feld, die vorgesehen sind, um miteinander verschweißt zu werden, wobei das besagte erste und zweite Feld nichtkomplementäre Formen aufweisen und wobei das erste Feld (26) mindestens eine Ausstülpung (36) aufweist, während das zweite Feld (27) an der Stelle, die zur Befestigung an der besagten Ausstülpung bestimmt ist, in etwa eben ausgeführt ist, **dadurch gekennzeichnet, dass** die besagte Ausstülpung ein Haken (34) ist.

2. Stabset nach Anspruch 1, **dadurch gekennzeichnet, dass** der besagte Haken (34) durch die Kombination eines Zahns (36) und zweier Nuten (38) gebildet wird.

3. Stabset nach Anspruch 2, **dadurch gekennzeichnet, dass** jede Nut (38) zusammen mit dem Zahn (36) eine Öffnung (40) definiert.

4. Stabset nach Anspruch 2 oder 3, **dadurch gekennzeichnet, dass** der besagte Zahn (36), von vorn gesehen, eine Rautenform aufweist und dass er aus einer Basis (44), über die sich der Zahn (36) an den Stab anschließt, und an seinem freien Ende aus einer Spitze (46) besteht.

5. Stabset nach Anspruch 4, **dadurch gekennzeichnet, dass** sich die Basis (44) und die Spitze (46) an der Stelle mit maximaler Breite des Zahns (36) entlang einer allen Zähnen (36) gemeinsamen Ebene B aneinander anschließen.

6. Stabset nach Anspruch 4 oder 5, **dadurch gekennzeichnet, dass** die besagte Basis (44) Flanken (50) umfasst, welche erste Flächen von zwei Nuten (38) begrenzen, die sich beiderseits des Zahns (36) erstrecken, und dass zweite Flächen (52) der besagten Nuten (38) in etwa parallel zu den besagten ersten Flächen verlaufen.

7. Stabset nach einem der Ansprüche 2 bis 6, **dadurch gekennzeichnet, dass** das Volumen von zwei an einen Zahn (36) angrenzenden Nuten (38) gleich dem Werkstoffvolumen der Spitze (46) dieses Zahns (36) ist.

8. Verfahren zur Herstellung eines Rahmens (12) zum Tragen eines Filtermediums (14), insbesondere für einen Filter (10) zur Ausrüstung einer Belüftungs-, Heizungs- oder Klimaanlage eines Kraftfahrzeugs, ausgehend von einem Stabset nach einem der vorangehenden Ansprüche, wobei das besagte Verfahren die nachstehenden aufeinanderfolgenden Verfahrensschritte umfasst:
a) Schmelzen eines ersten (S1) und zweiten (S2) Bereichs, die durch das besagte erste (26) bzw. zweite (27) Feld eingefasst sind,
b) Anlegen und Anpressen des besagten ersten Felds (26) auf dem besagten zweiten Feld (27), so dass der besagte erste und zweite Bereich, insbesondre an den Stellen, an denen das erste und zweite Feld nichtkomplementäre Formen aufweisen, ineinander eindringen,
c) Abkühlung des ineinander eingedrungenen ersten und zweiten Bereichs, um sie aushärten zu lassen.

9. Verfahren nach Anspruch 8, wobei das erste Feld (26) mindestens einen Haken (36) aufweist und das zweite Feld (27) eben ist, bei dem im Verfahrensschritt a) nur ein freies Ende (46) des Hakens (36) geschmolzen wird.

10. Verfahren nach Anspruch 9, bei dem im Verfahrensschritt b) der besagte Haken (36) bis zur vollständigen Verfüllung der Öffnung(en) (40, 38) des besagten Hakens (36) durch den zurückgeflossenen Werkstoff in den zweiten Bereich (S2) gedrückt wird.
